# EUROPEAN PATENT SPECIFICATION

(11) **EP 0 383 891 B1**
(45) Date of publication and mention of the grant of the patent: **12.10.1994**
(21) Application number: 89909649.9
(22) Date of filing: 18.08.1989
(51) Int. Cl.: G06F 11/10

(54) **PIPELINED ADDRESS CHECK BIT STACK CONTROLLER**
STEUERGERÄT FÜR EINEN PIPELINE-ADRESSENPRÜFBIT-STAPELSPEICHER
CONTROLEUR DE PILE BINAIRE POUR LA VERIFICATION D'ADRESSES EN PIPELINE

(30) Priority: 30.08.1988 US 238084
(43) Date of publication of application: 29.08.1990
(73) Proprietor: UNISYS CORPORATION, Blue Bell, PA 19424 (US)
(72) Inventor: SCHEUNEMAN, James, Herman, St. Paul, MN 55105 (US); PEIRSON, Paul, Lawrence, Forest Lake, MN 55025 (US); MAYER, Michael, Eugene, Fridley, MN 55432 (US)
(74) Representative: Eisenführ, Speiser & Partner
(86) International application number: US8903523
(87) International publication number: WO9002372

(56) References cited:
- US-A- 3 963 908
- US-A- 4 174 537
- US-A- 4 253 147
- Patent Abstract of Japan, vol. 4, no. 172 (P-38)(654), 27 November 1980, & JP, A, 55117799
- Electronic Design, vol. 29, no. 20, 30 September 1981, (Waseca , MN, US), M. Bazes et al.: "Keep memory design simple yet cull single-bit errors", pages 195-201.

## Description

### BACKGROUND OF THE INVENTION

Field of the Invention The present invention is related to the error checking and the detection of erroneous address bits in a data processing system, and, in particular, to error checking and detection of such address bit in a pipelined manner.

General Background Error checking and detection of erroneous bits for both data words and addresses are currently implemented in modern data processing systems. Such systems may require multiple ports to allow remote processors to access a common storage module. The present invention provides for single and double bit data and address error checking and for single bit error correction of the data bits in a pipelined manner with a minimum of overhead in terms of hardware and complexity.

Document D1 = ELECTRONIC DESIGN Sept. 81, Vol.29, No.20, pp.195-201 discloses an error detection and correction unit (EDCU) having a dual bus architecture that can cooperate with a memory in such a manner that if an error is detected in said memory during a read, the read cycle is extended to a read/modify/write cycle where the corrected data is rewritten to the same memory location.

### SUMMARY OF THE INVENTION

In this invention, as claimed in claim 1, address bits received from multiple input ports on a pipelined basis are tested to locate bit errors during Write, Read and Partial Write operations. The system provides for such testing in a manner which is relatively easily implemented by using first-in, first-out (FIFO) Memory Stacks and Load Read and Write Address Pointers and Read, Write and Partial Write Pointers. These pointers are initiated by each Load Address signal received from a processor which starts a timing sequence that results in the generation of the Write, Read and Partial Write Pointers in a succession in a fixed timing cycle in which each successive pointer occurs a fixed time after the prior one, in the above-noted order. The Load Read Address Stack Pointer and the Load Write Address Stack Pointer may occur at the same time or at different times, but the Load Read Address Stack Pointer must precede the Read Pointer and the Load Write Address Stack Pointer must precede the Write Pointer.

### BRIEF DESCRIPTION OF THE DRAWINGS

The present invention is illustrated by reference to the drawing in which:

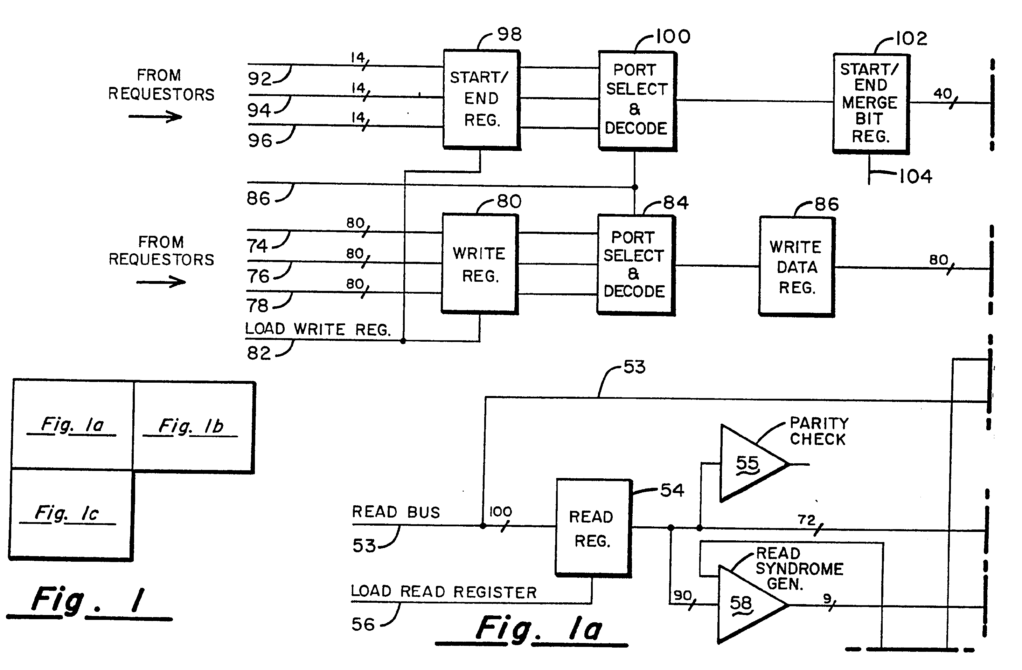

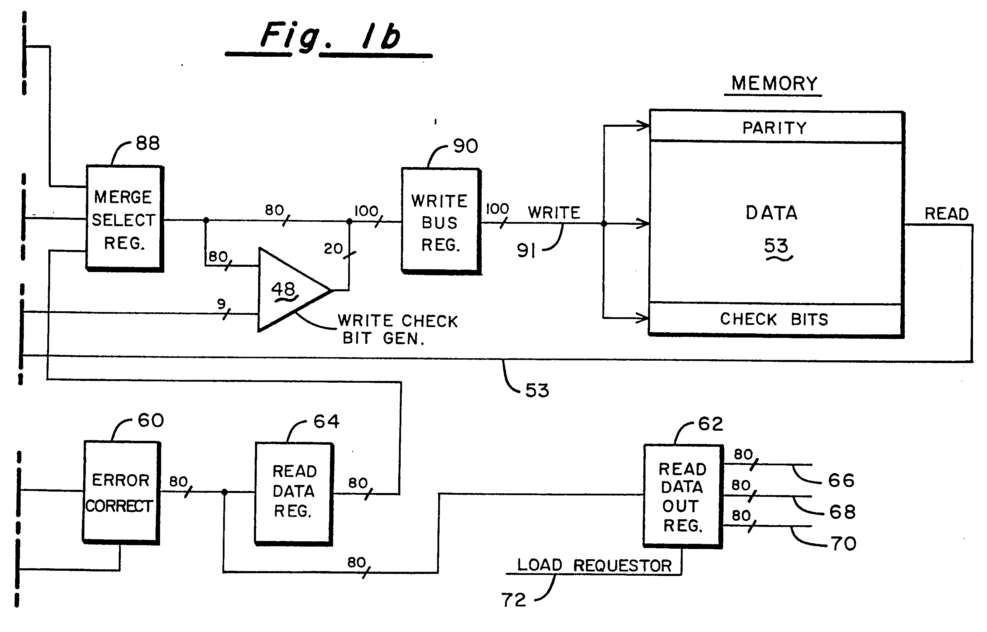

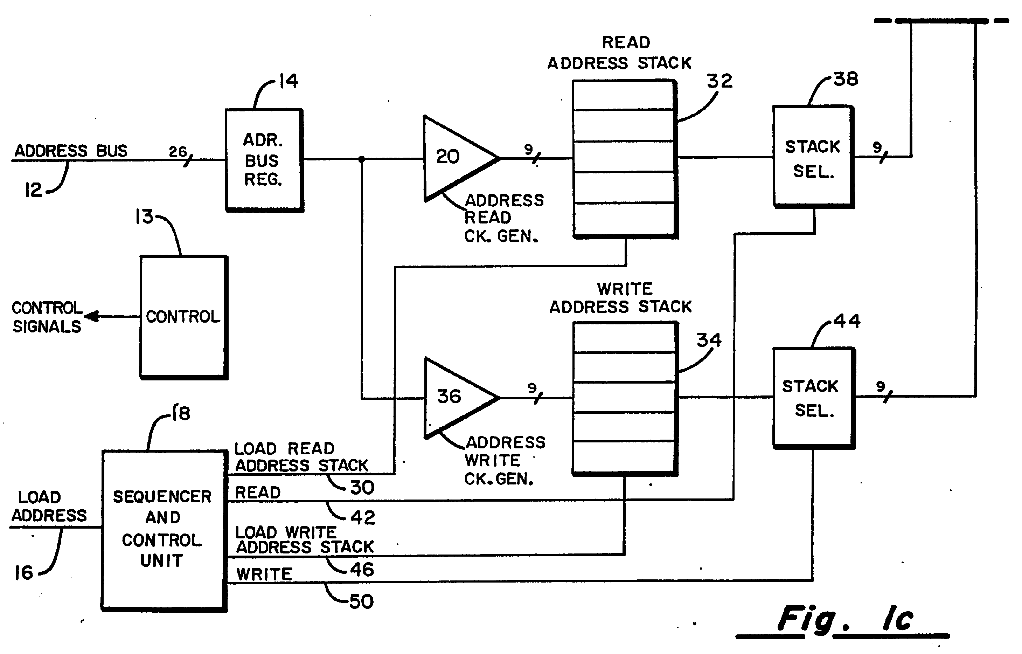

Fig. 1 shows a layout for Figs. 1a, 1b and 1c, and
Figs. 1a, 1b and 1c are an overall block diagram of the pipelined address check bit control system of the present invention.

### TECHNICAL DESCRIPTION OF THE INVENTION

A pipelined address check-bit stack controller constructed in accordance with the present invention is shown in the drawings. This controller is particularly useful in a multiple-user environment in which different requesters issue priority requests and the requestors are assigned priority on some predetermined basis. When an address has been sent by a remote requestor or processor (not shown) on the 26 bit Address Bus 12 to the Address Register 14, along with a Load Address signal to the Sequencer and Control Unit 18 on the Load Address line 16, the address stored in the Address Bus Register 14 is coupled to a Address Read Check Generator 20. These 26 address bits may be used to specify memory units, banks, block addresses and words in an addressed block. The Address Read Check Generator 20 provides 8 check bits plus one parity bit in a conventional manner to verify the integrity of the address information.

The Load Address signal on the line 16 initiates the timing cycle for the address check bit stacks and the loading of addresses. For simplicity of implementation, it is preferred that the Load Write Address Stack Pointer signal occurs on the line 46 at the same time as the Load Read Address Stack Pointer signal on the line 30. The load address timing cycle begins upon a change of state of the Load Address signal from a high to a low level. When a second load address request is received by the Sequencer and Control Unit 18 and the Load Address signal again changes state from a high to a low, another new timing cycle is initiated. In a modern high speed data processing system these Load Address signals may occur as fast as every 30 nanoseconds.

The Load Read Address Stack and Write Address Stack Pointers are advanced each time the Load Address signal goes from a high to a low level. This advancement occurs at a fixed, continuously repeatable sequence after each transition of the Load Address signal from a high to a low level. The Load Read Address Stack Pointer signal is supplied on the line 30 to a Read Address Stack 32. This stack must be of sufficient depth to prevent overriding of stored information in the stack during normal operation, and generally will be of five levels or more. The Address Read Check Generator 20 produces 8 check bits and one parity bit that are stored in, and fill one level of the Read Address Stack 32.

Although a single stack could be employed for both read and write operations, it is expedient for ease of implementation to employ a separate Write Address Stack 34, which is supplied 8 address write check bits and one priority bit by the Address Write Check Generator 36. This minimizes the number of different types of circuit chips that are required and provides duplexing which can be used to isolate errors that affect only one of the stacks.

During the read cycle, the first group of check bits that have entered into the Read Address Stack 32 emerge first from the stack. These check bits are supplied to the Read Stack Selector 38 which supplies 8 address check bits and an associated parity bit to a Read Syndrome Generator 58 under the control of the Read Pointer that is supplied by the Sequencer and Control Unit 18 on the line 42. In a similar manner, the Write Stack Selector 44 receives 8 write check bits plus 1 parity bit from the Write Address Stack 34 under the control of the Write Pointer signal on the line 50. The Write Stack Selector 44 is gated to one input of the Write Check Bit Generator 48 in response to the Write Pointer on the line 50 from the Sequencer and Control Unit 18. The check bits plus the associated parity bits from the Write Stack Selector 44 that were received on its other input are used for write and partial write checking. The Write Check Bit Generator 48 generates 10 bits for each word of data, which consist of 8 check bits, a total data word parity bit and a parity bit for a byte formed of the 8 check bits and the total data word parity bit.

The read operation and the use of the stored Read Address Check Bits stored in the Read Address Stack 32 will now be discussed. The Read Bus 53 is 100 bits wide in the disclosed embodiment, and it is coupled to the Memory which has data, parity and check bits stored therein. The 100 bits from a combined memory word that consists of two data words of 36 bits (4 nine bit bytes) each, plus 1 total data word parity bit for each word, 8 check bits for each word, 4 data byte parity bits and one parity bit for a byte that consists of the 8 check bits and the total data word parity bit for each word.

These 100 bits are coupled into the Read Register 54 under control of a Load Read Register signal from the Controller 13 that is supplied on the line 56. The parity bits are checked at the interface by the Parity Check Circuit 55. Two words at a time, each consisting of 36 data bits plus 8 check bits and a total data parity bit are read out of the Read Register 54 to the Read Syndrome Generator 58, which also receives 9 bits at a time from the Read Stack Selector 44 and generates 9 Read Syndrome bits. The output of the Read Syndrome Generator 58 is supplied to an error correction circuit 60, which may be of a type known in the art, to correct errors in data words before they are sent to the Read Data Out Register 62 and the Read Data Register 64. Due to complexity of implementation, single and double bit error detection and single bit error correction of the data word should suffice for most applications. Two 36-bit words of data plus the data byte parity bits are stored in the Data Read Out Register 62, and are read out on a selected line 66, 68, or 70 under the control of signals on the Load Requestor line 72. The Read Data Register 64 is utilized when a Partial Write is performed, as will be described subsequently.

The Write operation precedes the Read operation, and, therefore, a Write Pointer signal on the line 50 occurs at an earlier time than the Read Pointer signal on the line 42. This is to allow for reading of data prior to its merging with write data in a partial write operation. Both the Write and Read Pointers occur at fixed intervals following the transition of the Load Address signal on the line 16 from a high to a low level after the start of each timing cycle of the Sequencer 18. During a Write cycle, the write data from the remote processor in control is transmitted in groups of two words of 72 data bits plus 8 data byte parity bits on the associated Write Buses 74, 76 or 78 to the Write Register 80 under control of the Load Write Register Line 82. The particular port write data that is to be written at any time is determined by the Port Select Decoder 84 as determined by code on the port selection Bus 86. The write data is then supplied to the Write Data Register 86. During a full word write, the Merge Select Register 88 receives two 36 data bit words plus 4 data byte parity bits. As previously noted, the Write Check Bit Generator 48 generates 20 check bits which are combined with data bits and stored in the Write Bus Register 90, and then these bits are transferred as 50 bit words for storage in the Memory 53.

Address check bits generated during Partial Write operations may also be verified with the pipelined address check bits stack controller of the present invention. A Partial Write operation results when a word which has been read from memory has been corrected, and then a predetermined number of bits are written over the corrected word. The portion of the word that is written over may be divided into partial word bits from 1 to 35 bits. Partial address write check bits are verified at the time subsequent to the time allotted for the verification of the read address bits.

When a Partial Write operation occurs, the word read from Memory 53 from the previous cycle is stored in the Read Data Register 64. The Start and End Code bits for controlling the Partial Write masking operation are supplied by each of the requestors on the Partial Write Buses 92, 94, and 96 to the Start/End Register 98. There are 6 start bits plus a parity bit and 6 end bits plus another parity bit per merged word. The Port Selector and Decoder 100 is responsive to the select signal on the Bus 86 to select one set of 14 start/end and parity bits from one of the remote requestors. The selected Start and End Code bits from the requestor are then decoded and stored in the Start/End Merge Bit Register 102. A control signal from the Controller 13 on the line 104 to the Start/End Merge Bit Register activates a Partial Write operation.

During a Partial Write operation, the Start/End Merge Bit Register 102 contains the code which specifies the Starting and Ending bits which specify where the write data will overwrite a previously read data word. The write data is obtained from the remote requestors on the Buses 74, 76 and 78 via the Write Register 80, and the Port Selector and Decoder 84 and the Write Data Register 86, as previously described in connection with the full write operation. The read data in the Read Data Register 64 and the write data in the Write Data Register 86 are then merged and stored in the Merge Select Register 88 in accordance with the decoded Start and End codes stored in the Start/End Merge Bit Register 102. Partial Write address check bits are gated out of the Write Stack Selector 44 by a Partial Write Pointer signal that is applied on the line 50 that occurs at a point in time after the Read Pointer signal has been supplied on line 42. The Write Address Stack 34 is thus able to accommodate the address check bits for both full Write and the Partial Write operations.

## Claims

1. An address bit controller for an addressable memory system which is shared by a plurality of requesting processors, each of which processors is capable of supplying sets of signals which represent either read, or write or partial write address to enable writing information into, or reading information from, said memory system during read, write and partial write operations, comprising:
addressing means (14) for receiving sets of address signals from said processors and for storing binary bit representations of said sets of address signals,
address read check generator means (20) coupled to said addressing means for generating read address check bits when a set of address signals received by said addressing means represents a read address,
address write check bit generator means (36) coupled to said addressing means (14) for generating write address check bits when a set of address signals received by said addressing means represents a write address,
controllable stack means (32, 34, 38, 44) for loading and storing said read address check bits and said write address check bits under the control of load address signals (30, 46), said controllable stack means being constructed to selectively read out said write address check bits during a write operation under the control of write pointer signals (50), to selectively read out from said controllable stack means said read address check bits during read and partial write operations under the control of read pointer signals (42) and to selectively read out from said controllable stack means said write address check bits during partial write operations under the control of partial write pointer signals,
sequencer means (13, 18) coupled to said controllable stack means for supplying sequences of signals in which each sequence comprises load address, write pointer (50), read pointer (42) and partial write pointer signals each time an address signal is received by said addressing means (14) from one of said processors, wherein said write pointer signal precedes said read pointer signal by a fixed time, said read pointer signal precedes said partial write pointer signal by a fixed time, and said load address signals precede said pointer signals by a fixed amount in each of said sequences,
addressable memory means (53) having provisions for storing data bits and write check bits at addresses selected by the address signals received from said processors during said write operations, and for reading data bits and said stored check bits from addresses selected by the address signals received from said processors during write read and partial write operations,
read means (54, 55, 58, 60, 64) coupled to said processors and to said addressable memory means (53) for receiving read data addresses from said processors and for reading data and associated check bits from addresses of said addressable memory means selected by said processors;
write means (80, 84, 86, 88, 48, 90, 98, 100, 102) coupled to said processors and to said addressable memory means (53) for receiving write data from said processors for writing either full data words or partial data words into said addressable memory means during write and partial write operations, respectively, at addresses selected by said processors, comprising merge means (88) coupled to said read means (54, 55, 58, 60, 64) for receiving read data therefrom for selectively either writing write data into said addressable memory means during a write operation or for merging write data with read data and writing merged data into said addressable memory means during a partial write operation, and further coupled to receive said write address check bits from said controllable stack means for storing write check bits into said addressable memory means at addresses which correspond to associated data words that are writen into said addressable memory means,
write check generator means (48) coupled to said controllable stack means for receiving write address check bits from said controllable stack means and for receiving write data to be written into said addressable memory means that is associated with said write address check bits, which is constructed to generate said write check bits and to supply said write check means to a write bus register (90) of said write means;
said read means comprising read syndrome generator means (58) for receiving said stored check bits read from said addressable memory means (53) and to said controllable stack means for receiving said read address check bits associated with the addresses of data read from said addressable memory means (53),
error correction means (60) coupled to said read syndrome generator means (58) for receiving the output of said syndrome generator means constructed to detect at least some data and stored check bit errors and to correct at least some of said data bit errors, said error correction means (60) being further coupled to said write means for coupling the output of said error correction means (60) to said merge means (88) during said partial write operation, and
data output means (62) coupled to said error correction means (60) for receiving the output of said error correction means during read operations and for supplying said output from said error correction means to said processors during a read operation.

## Patentansprüche

1. Adressenbitsteuergerät für ein adressierbares Speichersystem, welches von einer Vielzahl von abfragenden Prozessoren geteilt wird, wobei jeder der Prozessoren in der Lage ist, Signalsätze zur Verfügung zu stellen, die entweder Lese- oder Schreib- oder partielle Schreibadressen darstellen, um zu ermöglichen, daß während Lese-, Schreib- oder partiellen Schreiboperationen eine Information in das Speichersystem geschrieben oder eine Information aus dem Speichersystem gelesen wird, mit:
Adressiermitteln (14) zum Empfangen von Adreßsignalsätzen von den Prozessoren und zum Speichern binärer Bitdarstellungen der Adreßsignalsätze,
an den Adressiermitteln angeschlossenen Adressenleseprüfungserzeugungsmitteln (20) zum Erzeugen von Leseadressenprüfbits, wenn ein durch die Adressiermittel empfangener Adreßsignalsatz eine Leseadresse darstellt,
an den Adressiermitteln (14) angeschlossenen Adressenschreibprüfbiterzeugungsmitteln (36) zum Erzeugen von Schreibadressenprüfbits, wenn ein durch die Adressiermittel empfangener Adreßsignalsatz eine Schreibadresse darstellt,
steuerbaren Stapelmitteln (32, 34, 38, 44) zum Laden und Speichern der Leseadressenprüfbits und der Schreibadressenprüfbits unter der Steuerung von Ladeadreßsignalen (30, 46), wobei die steuerbaren Stapelmittel konstruiert sind, um die Schreibadressenprüfbits während einer Schreiboperation unter der Steuerung von Schreibzeigersignalen (50) selektiv auszulesen, um selektiv aus den steuerbaren Stapelmitteln die Adressenprüfbits während Lese- und partiellen Schreiboperationen unter der Steuerung der Lesezeigersignale (42) auszulesen, und um selektiv die Schreibadressenprüfbits aus den steuerbaren Stapelmitteln während partieller Schreiboperationen unter der Steuerung der partiellen Schreibzeigersignale auszulesen,
an den steuerbaren Stapelmitteln angeschlossenen Sequenziermitteln (13, 18) zum Liefern von Signalsequenzen, in der jede Sequenz Ladeadressen, Schreibzeiger (50), Lesezeiger (42) und partielle Schreibzeigersignale umfaßt, jedesmal wenn ein Adressen-Signal durch die Adressiermittel (14) aus einer der Prozessoren empfangen wird, das Schreibzeigersignal dem Lesezeigersignal mit einer festen Zeit vorausgeht, das Lesezeigersignal dem partiellen Schreibzeigersignal mit einer festen Zeit vorausgeht und die Ladeadreßsignale den Zeigersignalen in jeder der Sequenzen um eine festen Größe vorausgehen,
adressierbaren Speichermitteln (53) mit Vorrichtungen zum Speichern von Datenbits und Schreibprüfbits an Adressen, die durch die von den Prozessoren während der Schreiboperationen empfangenen Adressen-Signale ausgewählt wurden, und zum Lesen von Datenbits und den gespeicherten Prüfbits aus Adressen, die durch die von dem Prozessor während der Schreib-, Lese- und partiellen Schreiboperationen empfangenen Adreßsignale ausgewählt wurden,
an den Prozessoren und den adressierbaren Speichermitteln (53) angeschlossenen Lesemitteln (54, 55, 58, 60, 64) zum Empfangen von Lesedatenadressen aus den Prozessoren und zum Lesen von Daten und damit verbundenen Prüfbits aus Adressen der adressierbaren Speichermittel, die durch den Prozessor ausgewählt wurden;
an den Prozessor und an den adressierbaren Speichermitteln (53) angeschlossenen Schreibmitteln (80, 84, 86, 88, 48, 90, 98, 100, 102) zum Empfangen von Schreibdaten aus den Prozessoren, zum Schreiben von vollständigen Datenwörtern oder zum Schreiben von partiellen Datenwörtern in die adressierbaren Speichermittel während jeweils der Schreib- und partiellen Schreiboperationen unter durch die Prozessoren ausgewählte Adressen, mit Mischmitteln (88), die an die Lesemittel (54, 55, 58, 60, 64) angeschlossen sind zum Empfangen von Lesedaten aus diesen, zum selektiven Schreiben von Schreibdaten in die adressierbaren Speichermittel während einer Schreiboperation oder zum Mischen von Schreibdaten mit Lesedaten und Schreiben der gemischten Daten in die adressierbaren Speichermittel während einer partiellen Schreiboperation und außerdem angeschlossen sind, um die Schreibadressenprüfbits aus den steuerbaren Stapelmitteln zu empfangen, um die Schreibprüfbits in die adressierbaren Speichermittel in Adressen zu speichern, die den zugehörigen Datenwörtern entsprechen, die in die adressierbaren Speichermittel geschrieben werden,
an den steuerbaren Stapelmitteln angeschlossenen Schreibprüfungserzeugungsmitteln (48) zum Empfang von Schreibadressenprüfbits aus den steuerbaren Stapelmitteln und zum Empfang von Schreibdaten, die in die adressierbaren Speichermittel zu schreiben sind, die den Schreibadressenprüfbits zugeordnet sind, welche konstruiert sind, um die Schreibprüfbits zu erzeugen und die Schreibprüfmittel einem Schreibbusregister (90) der Schreibmittel zur Verfügung zu stellen; wobei die Lesemittel enthalten
Lesesyndromerzeugungsmittel (58) zum Empfangen der gespeicherten Prüfbits, die aus den adressierbaren Speichermitteln (53) und in die steuerbare Stapelmittel gelesen wurden, zum Empfang der Leseadressenprüfbits, die den Adressen der aus den adressierbaren Speichermitteln (53) ausgelesenen Daten zugeordnet sind,
an die Lesesyndromerzeugungsmittel (58) angeschlossene Fehlerkorrekturmittel (60) zum Empfangen des Ausgangssignals der Syndromerzeugungsmittel, welche konstruiert sind, um mindestens einige Daten und gespeicherte Prüfbitfehler zu detektieren und um mindestens einige der Datenbitfehler zu korrigieren, wobei die Fehlerkorrekturmittel (60) außerdem an die Schreibmittel angeschlossen sind, um den Ausgang der Fehlerkorrekturmittel (60) mit den Mischmitteln (88) während der partiellen Schreiboperation zu koppeln, und
an die Fehlerkorrekturmittel (60) angeschlossene Datenausgangsmittel (62) zum Empfangen des Ausgangssignals der Fehlerkorrekturmittel während der Leseoperationen und zur Übertragung des Ausgangssignals der Fehlerkorrekturmittel an die Prozessoren während der Leseoperation.

## Revendications

1. Contrôleur de pile binaire pour un système de mémoire accessible par adresse qui est partagée par une pluralité de processeurs demandeurs, chacun de ces processeurs peut fournir un ensemble de signaux qui représente une adresse soit de lecture, soit d'écriture, soit d'écriture partielle pour permettre l'écriture d'informations ou la lecture d'informations dans ledit système de mémoire pendant des opérations de lecture, d'écriture et d'écriture partielle, comprenant :
un moyen d'adressage (14) pour recevoir les ensembles de signaux d'adresses desdits processeurs et pour mémoriser des représentations de bits binaires desdits ensembles de signaux d'adresses ;
un moyen de création de bits de vérification de lecture (20) couplé audit moyen d'adressage pour créer des bits de vérification d'adresse de lecture lorsqu'un ensemble de signaux d'adresses reçu par ledit moyen d'adressage représente une adresse de lecture ;
un moyen de création de bits de vérification d'écriture (36) couplé audit moyen d'adressage (14) pour créer des bits de vérification d'adresse d'écriture lorsqu'un ensemble de signaux d'adresses reçu par ledit moyen d'adressage représente une adresse d'écriture ;
des moyens formant piles contrôlables (32, 34, 38, 44) pour charger et mémoriser lesdits bits de vérification d'adresse de lecture et lesdits bits de vérification d'adresse d'écriture sous le contrôle des signaux de Chargements d'adresses (30, 46), lesdits moyens formant piles contrôlables étant construits pour effectuer une lecture sélective desdits bits de vérification d'adresse d'écriture pendant l'opération d'écriture sous le contrôle des signaux de pointeurs d'écriture (50), pour effectuer une lecture sélective dans lesdits moyens formant piles contrôlables desdits bits de vérification d'adresse de lecture pendant les opérations de lecture et d'écriture partielle sous le contrôle des signaux de pointeurs de lecture (42) et pour effectuer une lecture sélective dans lesdits moyens formant piles contrôlables desdits bits de vérification d'adresse d'écriture pendant les opérations d'écriture partielle sous le contrôle des signaux de pointeurs de lecture d'écriture partielle ;
des moyens formant séquenceurs (13, 18) couplés auxdits moyens formant piles contrôlables pour fournir les séquences de signaux dans lesquelles chaque séquence comprend des signaux de Chargements d'adresses, de pointeur d'écriture (50), de pointeur de lecture (42) et de pointeur d'écriture partielle chaque fois qu'un signal d'adresse est reçu par ledit moyen d'adressage (14) depuis l'un desdits processeurs, dans lesquels ledit signal de pointeur d'écriture précède ledit signal de pointeur de lecture d'un temps prédéterminé, ledit signal de pointeur de lecture précède ledit signal de pointeur d'écriture partielle d'un temps prédéterminé, et lesdits signaux de Chargements d'Adresses précèdent lesdits signaux de pointeurs d'une quantité fixe dans chacune desdites séquences ;
un moyen de mémoire accessible par adresse (53) ayant des emplacements libres pour mémoriser des bits de données et des bits de vérification d'écriture à des adresses sélectionnées par les signaux d'adresses reçus des processeurs pendant lesdites opérations d'écriture, et pour la lecture de bits de données et desdits bits de vérification mémorisés selon les adresses sélectionnées par les signaux d'adresses reçus desdits processeurs pendant les opérations d'écriture, de lecture et d'écriture partielle ;
des moyens de lecture (54, 55, 58, 60, 64), couplés auxdits processeurs et audit moyen de mémoire accessible par adresse (53), pour recevoir des adresses de données de lecture desdits processeurs et pour lire des données et des bits de vérification associés selon des adresses dudit moyen de mémoire accessible par adresse sélectionnées par lesdits processeurs ;
des moyens d'écriture (80, 84, 86, 88, 48, 90, 98, 100, 102), couplés auxdits processeurs et audit moyen de mémoire accessible par adresse (53), pour recevoir des données d'écriture desdits processeurs pour l'écriture soit de mots de données entiers, soit de mots de données partiels dans ledit moyen de mémoire accessible par adresse pendant, respectivement, des opérations d'écriture ou d'écriture partielle, à des adresses sélectionnées par lesdits processeurs, comprenant un moyen de fusion (88) couplé auxdits moyens de lecture (54, 55, 58, 60, 64), pour recevoir de ceux-ci des données de lecture pour, de façon sélective, soit écrire des données d'écriture dans ledit moyen de mémoire accessible par adresse pendant l'opération d'écriture, soit pour fusionner des données d'écriture avec des données de lecture et écrire les données fusionnées dans ledit moyen de mémoire accessible par adresse pendant une opération d'écriture partielle, et également couplé pour recevoir lesdits bits de vérification d'adresse d'écriture desdits moyens formant piles contrôlables pour mémoriser les bits de vérification d'écriture dans ledit moyen de mémoire accessible par adresse aux adresses qui correspondent aux mots de données associés qui sont écrits dans ledit moyen de mémoire accessible par adresse ;
un moyen de création de bits de vérification d'écriture (48), couplé auxdits moyens formant piles contrôlables et pour recevoir les données d'écriture à écrire dans ledit moyen de mémoire accessible par adresse qui est associé auxdits bits de vérification d'adresse d'écriture, qui est construit pour produire lesdits bits de vérification d'adresse d'écriture, et pour fournir lesdits moyens de vérification à un registre de bus d'écriture (90) desdits moyens d'écriture ;
lesdits moyens d'écriture comprenant un moyen de génération de diagnostic d'erreur de lecture (58) pour recevoir lesdits bits de vérification mémorisés lus dans ledit moyen de mémoire accessible par adresse (53) et envoyés auxdits moyens formant piles contrôlables pour récupérer lesdits bits de vérification d'adresse de lecture associés avec les adresses des données lues dans ledit moyen de mémoire accessible par adresse (53) ;
un moyen de correction d'erreur (60) couplé audit moyen de génération de diagnostic d'erreur de lecture (58) pour recevoir le constat dudit moyen de génération de diagnostic construit pour détecter au moins certaines erreurs de bits de vérification mémorisés et de bits de données et pour corriger au moins certaines desdites erreurs de bits de données, ledit moyen de correction d'erreur (60) étant en outre couplé auxdits moyens d'écriture pour coupler la sortie dudit moyen de correction d'erreur (60) audit moyen de fusion (88) pendant ladite opération d'écriture partielle ; et
un moyen de sortie de données (62), couplé audit moyen de correction d'erreur (60) pour recevoir la sortie dudit moyen de correction d'erreur pendant les opérations de lecture et pour envoyer ladite sortie dudit moyen de correction d'erreur auxdits processeurs pendant une opération de lecture.
